(19)

Europäisches Patentamt
European Patent Office
Office européen des brevets

(11) **EP 4 492 662 A2**

(12) **EUROPEAN PATENT APPLICATION**

(43) Date of publication:
**15.01.2025 Bulletin 2025/03**

(21) Application number: **24209960.4**

(22) Date of filing: **30.10.2024**

(51) International Patent Classification (IPC):
**H02M 1/00** *(2006.01)*    **H02M 3/00** *(2006.01)*
**H02M 3/335** *(2006.01)*    **H02M 3/158** *(2006.01)*

(52) Cooperative Patent Classification (CPC):
**H02M 3/01; H02M 1/0025; H02M 3/33515;**
**H02M 3/1584**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
• **NXP USA, Inc.**
  **Austin, TX 78735 (US)**
• **The Governing Council of the University of Toronto**
  **Toronto, Ontario M5G 1L7 (CA)**

(72) Inventors:
• **COBANI, Orest**
  **5656AG Eindhoven (NL)**

• **TRESCASES, Olivier**
  **5656AG Eindhoven (NL)**
• **BERTOLINI, Luca**
  **5656AG Eindhoven (NL)**
• **van den BERG, Arjan**
  **5656AG Eindhoven (NL)**
• **HALBERSTADT, Hans**
  **5656AG Eindhoven (NL)**
• **LAMMERS, Thieu**
  **5656AG Eindhoven (NL)**

(74) Representative: **Hardingham, Christopher Mark**
**NXP Semiconductors**
**Intellectual Property Group**
**Abbey House**
**25 Clarendon Road**
**Redhill, Surrey RH1 1QZ (GB)**

(54) **DISTRIBUTED CONTROL OF UNCOUPLED MULTIPHASE LLC RESONANT CONVERTERS**

(57)    Disclosed is a phase-controller and method of hysteretic control of a phase of a decoupled multiphase resonant converter, using a hysteretic window offset control parameter, the method comprising: determining a minimum 50% duty cycle (50% DC) operating frequency, fmin, from a set consisting of the respective 50% DC operating frequency of each phase of the multiphase resonant converter; in response to the 50% duty cycle operating frequency of the phase being different from fmin, adjusting the hysteretic window offset of the phase to change a current operating frequency of the phase towards fmin; and, in response to a change of an operating condition of the phase: re-adjusting the hysteretic window offset of the phase to change the operating frequency of the phase towards fmn; and in the event that a new 50% dc operating frequency of the phase, f*min, is less than fmin; replacing fmin by f*min, and communicating f*min as a new minimum 50% dc operating frequency to each other phase.

**FIG. 1**

**EP 4 492 662 A2**

## Description

FIELD OF THE DISCLOSURE

This present disclosure relates to multiphase resonant converters, and in particular to uncoupled multiphase resonant converters, controllers therefore, and methods of controlling such converters.

BACKGROUND

There is a growing trend towards more compact and energy efficient on-board chargers in, for example, automotive applications, which in turn is increasing the need for efficient and scalable power electronic converters. For high-power applications resonant converters, such as LLC dc-dc converters (which includes a resonant tank having both a capacitor and inductor, in addition to a magnetising inductance involved in the transfer of power from the primary to secondary side) offers the potential for high efficiency.

The phases of a multiphase dc-dc resonant converter may be coupled, either by magnetic coupling between the phases, or by electrical coupling, for example by arranging the phases so that a current through one phase may be forced to another phase. Alternatively, the phases may be arranged in parallel so as to operate relatively independently of each other. Such an arrangement may be considered to be "uncoupled". The present disclosure relates to uncoupled phases of a multiphase resonant converter. An uncoupled multiphase resonant converter may thus be considered to be fully modular, leading to a high degree of scalability and design flexibility.

For many applications, it is desirable that the phases of a multiphase resonant converter operate at the same frequency. Typically, this may be implemented by nominating one phase as the "leader" phase and the other phases as "follower" phases. However, this results in a symmetrical operation of the phases. It would be desirable to have a distributed control system in which no individual phase is a predetermined leader.

SUMMARY

According to a first aspect of the present disclosure, there is provided A method of hysteretic control of a phase of a decoupled multiphase resonant converter, using a hysteretic window offset control parameter, the method comprising: determining a minimum 50% duty cycle (50% dc) operating frequency, fmin, from a set consisting of the respective 50% dc operating frequency of each phase of the multiphase resonant converter; in response to the 50% dc operating frequency of the phase being different from fmin, adjusting the hysteretic window offset of the phase to change a current operating frequency of the phase towards fmin; and, in response to a change of an operating condition of the phase: re-adjusting the hysteretic window offset of the phase to change the operating frequency of the phase towards fmin; and in the event that a new 50% dc operating frequency of the phase, f*min, is less than fmin; replacing fmin by f*min, and communicating f*min as a new minimum 50% duty cycle operating frequency to each other phase.

Thereby, each phase or module of the multiphase converter is arranged to operate at the (same) frequency, for which one of the phases is operating at 50% duty cycle. The system is able to react to changes or perturbations, by each phase-controller regularly adjusting its hysteretic window offset - which directly adjusts its duty cycle - to ensure it is operating at this frequency, and if the operating conditions change the system can calculate and ensure each phase is aware of a new (same) operating frequency for which one of the phases is operating at 50% duty cycle.

In one or more embodiments, the method further comprises storing the set of the respective 50% duty cycle operating frequency of each phase of the multiphase resonant converter in a memory. In one or more such embodiments, if the 50% duty cycle operating frequency of the phase, prior to the change in operating condition, is greater than f*min, replacing fmin by f*min in the memory. The memory may include a bank of registers in order to store a set of 50% duty cycle operating frequency of each of the phases, and each phase independently selects the (same) register indicating the minimum frequency amongst this set which then becomes the target or reference operating frequency. Each phase may have its own separate memory, or the memory may be centrally located.

In one or more embodiments, a change in an operating condition of the phase is a change in one of the group consisting of an input voltage, an input current, a load impedance, and a load current. The system is able to react to such changes in operating condition and return to a stable operating state without the requirement for central control.

In one or more embodiments, the hysteretic window offset is an offset from a midpoint between a high input voltage level and a low input voltage level. In one or more embodiments, adjusting the hysteretic window offset of the phase to change a current operating frequency of the phase towards fmin, comprises adjusting the hysteretic window offset of the phase to change a current operating frequency of the phase until the current operating frequency of the phase is equal to fmin.

In one or more embodiments, the method further comprises adjusting a hysteretic window width of the phase to control an output current of the phase. The hysteretic window width may be a difference between a low voltage control set-point for starting charging a resonant tank of the phase, and a high voltage control set-point for stopping charging a resonant tank of the phase.

According to a second aspect of the present disclosure, there is provided a phase-controller for a phase of a decoupled multiphase resonant converter, using a hysteretic window offset control parameter, the phase-controller comprising: a hysteretic control module configured to control the phase using a hysteretic window width, and a hysteretic window offset to control a duty-cycle of the phase; a memory configured to store a minimum 50% duty cycle, 50% dc, operating frequency, fmin, from a set consisting of the respective 50% dc operating frequency of each phase of the multiphase resonant converter; and a communication module configured to send and receive signals indicative of fmin; wherein the hysteretic control module is further configured to: in response to the 50% dc operating frequency of the phase being different from fmin, adjust the hysteretic window offset of the phase to change a current operating frequency of the phase towards fmin; and, in response to a change of an operating condition of the phase: re-adjust the hysteretic window offset of the phase to change the operating frequency of the phase towards fmin; and in the event that a resulting 50% dc operating frequency of the phase, f*min, is less than fmin, replace fmin by f*min; and wherein the communication module is configured to communicate f*min as a new minimum 50% dc operating frequency to each other phase.

In one or more embodiments, the memory is further configured to store the set of the respective 50% duty cycle operating frequency of each phase of the multiphase resonant converter.

In one or more embodiments, the phase-controller is further configured to, in response to f*min being less than the 50% duty cycle operating frequency of the phase prior to the change in operating condition, replace fmin by f*min in the memory.

In one or more embodiments, a change in an operating condition of the phase is a change in one of the group consisting of an input voltage, an input current, a load impedance, and a load current. In one or more embodiments, the hysteretic window offset is an offset from a midpoint between a high input voltage level and a low input voltage level. In one or more embodiments, adjusting the hysteretic window offset of the phase to change a current operating frequency of the phase towards fmin, comprises adjusting the hysteretic window offset of the phase to change a current operating frequency of the phase until the current operating frequency of the phase is equal to fmin. In one or more embodiments, the phase-controller is further configured to adjust a hysteretic window width of the phase to control an output current of the phase.

According to another aspect of the present disclosure, there is provided a method of controlling a multiphase DC-DC resonant converter, the method comprising: each phase broadcasting its own 50% duty cycle operating frequency, to provide a set of 50% duty cycle operating frequencies; each phase adjusting, by changing a hysteretic window offset, its operating frequency towards a minimum of the set of 50% duty cycle operating frequencies; and, in response to operating at 50% duty cycle, any of the phases re-broadcasting its own 50% duty cycle operating frequency.

The method may further comprise, in response to the re-broadcast 50% duty cycle operating frequency being lower than a current minimum of the set of 50% duty cycle operating frequencies, replacing the current minimum by the re-broadcast frequency. In one or more embodiments, the method further comprises a respective controller for each phase storing the set of 50% duty cycle operating frequencies in a respective look-up table (LUT). In one or more embodiments, in response to the re-broadcasting, the respective controller for each phase updates a corresponding value in the LUT. The method may further comprise, in response to a changing in operating conditions of a one of the phases, the one of the phases re-adjusting, by changing the hysteretic window offset, its operating frequency towards the minimum of the set of 50% duty cycle operating frequencies.

There may be provided a computer program, which when run on a computer, causes the computer to configure any apparatus, including a circuit, controller, sensor, filter, or device disclosed herein or perform any method disclosed herein. The computer program may be a software implementation, and the computer may be considered as any appropriate hardware, including a digital signal processor, a microcontroller, and an implementation in read only memory (ROM), erasable programmable read only memory (EPROM) or electronically erasable programmable read only memory (EEPROM), as non-limiting examples. The software implementation may be an assembly program.

The computer program may be provided on a computer readable medium, which may be a physical computer readable medium, such as a disc or a memory device, or may be embodied as another non-transient signal.

BRIEF DESCRIPTION OF THE DRAWINGS

Reference will now be made to the accompanying drawings, which are not necessarily drawn to scale, and wherein:

FIG. 1 shows an example of a decoupled multiphase resonant converter;
FIG. 2A illustrates the frequency of an oscillatory system such as a DC-DC switched converter;
FIG. 2B illustrates hysteretic control corresponding to FIG. 2A;
FIG. 3 shows, in a duty-cycle / frequency plane, "iso-current" curves, or loci, for five modules of a multiphase LLC resonant converter;
FIG. 4 illustrates a control mechanism according to one part of the present disclosure;
FIG. 5 illustrates the control mechanism according under a change in operating condition of one of the phases;
FIG. 6 and FIG. 7 illustrate the control mechanism according under different changes in operating condition of one of the phases; and
FIG. 8 illustrates a communication means between controllers, and a part of one of the phase-controllers.

It should be noted that the FIG.s are diagrammatic and not drawn to scale. Relative dimensions and proportions of parts of these FIG.s have been shown exaggerated or reduced in size, for the sake of clarity and convenience in the drawings. The same reference signs are generally used to refer to corresponding or similar features in modified and different embodiments.

DETAILED DESCRIPTION

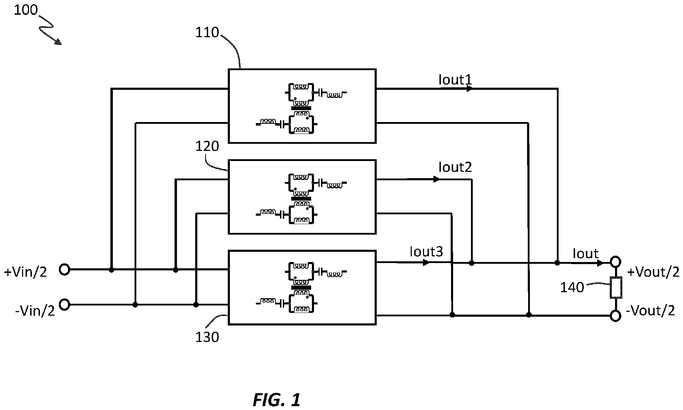

The present disclosure is concerned with the control of uncoupled multiphase resonant converters and in particular with DCDC such converters. An example of a decoupled multiphase resonant converter 100 is shown in FIG. 1. The FIG. shows three separate modules or phases, 110, 120 and 130, configured in parallel. The phases may be LLC converters, CLLC converters, as shown, or any other suitable resonant converter, having half-bridge, or full-bridge configuration as appropriate Each phase is supplied by current at an input voltage Vin, which as shown may be symmetrical about a zero voltage and thus have a high input voltage level +Vin/2, and a low input voltage level -Vin/2. Each phase outputs current at an output voltage Vout, which as shown may be symmetrical about a 0 voltage and thus have an high input voltage level +Vout/2, and a low input voltage level -Vout/2. The phases supply the respective output currentslout1, lout2 and lout3, which may be equal to each other, in particular in the case of the modules being of the same size, or may be different. The total output current, lout may be used to supply a load 140. Of course, it will be appreciated that the input voltage does not have to be symmetrical about a 0 voltage, but could be at some other level, provided it is tracked by the controller to enable suitable adjustment of the high and low threshold voltages, for which, see below.

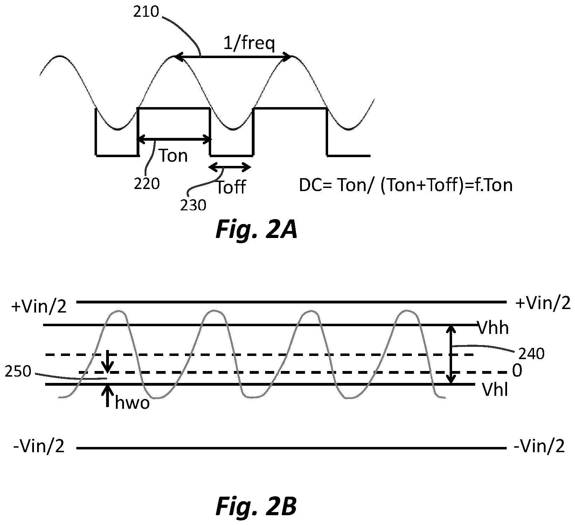

Resonant converters have 2 degrees of freedom in the control inputs for each phase. The duty cycle and frequency may be directly controlled; conversely the upper and lower limits of a hysteretic window may be controlled. In such hysteretic control, the difference between the upper and lower limits (typically defined by an maximum and minimum voltage at an appropriate point in the converter circuit) may be termed the hysteretic window width; the displacement of the centre of the window from a midpoint between upper and lower input voltage levels may be termed the hysteretic window offset. This is illustrated in FIG. 2A and FIG. 2B. FIG. 2A illustrates the frequency freq of an oscillatory system such as a DC-DC switched converter: with time going from left to right, this is displayed as the cycle period 1/freq 210. The FIG. also illustrates the duty cycle dc, which is defined through:

$$dc = Ton/(Ton + Toff) = f.Ton$$

where Ton 220 is the on-time, Tofff 230 is the of-time and

$$Ton + Toff = 1/freq.$$

FIG. 2B illustrates hysteretic control using a hysteretic window width, hww, parameter 240 together with a, second, hysteretic window offset parameter hwo 250. In the example shown, the input voltage is symmetrical about a midpoint "0V" level, and so the offset can either be positive or negative, around zero.

The present inventors have appreciated, that there is an equivalency relationship between, on the one hand, duty cycle and frequency control, and on the other hand hysteretic window width and hysteretic window offset control, and that this equivalency may be exploited to enable distributed or so-called "master-less" or leaderless control of a converter, as will be described in more detail hereinbelow.

In particular, for a DC-DC converter in which the individual phases are not coupled, the current through the individual phrases may vary between the phases but since the modules are arranged in parallel, the output voltage of each of the phases must be the same. Since the modules also have a common input voltage, and this implies that a voltage conversion ratio M, defined as M= Vout/Vin, must be the same for each module. Moreover, since the individual phases of the multiphase resonant converter, which phases may also be referred to as converter "modules", have two degrees of freedom, two control parameters may be adjusted in combination to maintain a given output current at a given conversion ratio M.

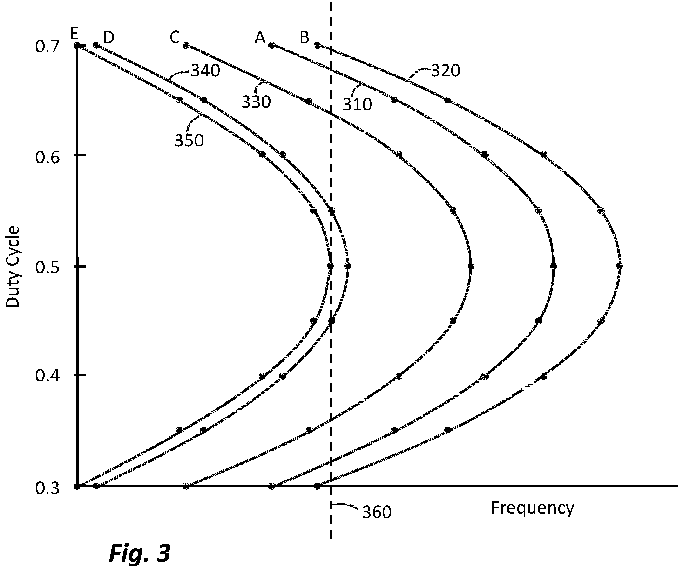

This is illustrated in FIG. 3. FIG. 3 shows, in a duty-cycle / frequency plane, "iso-current" curves, or loci, for five modules of a multiphase LLC resonant converter in which the inductance values or capacitance values of the LLC components vary, compared with a nominal value shown at A 310. In particular, increasing, by 20% in each case, the value of the magnetising inductance Lm, the resonant inductance Lr, and the resonant capacitance Cr results respectively in the "iso-current" curves B 320, C 330 and D 340 respectively, and increasing all three values by 20% results in curve E 350. The curves are "iso-current" curves since they show combinations of duty cycle and frequency which result in the same current output. For each of the curves, the operating frequency is maximum at 50% duty cycle, and as the duty cycle is increased or decreased from the 50% value, the frequency to maintain a fixed output current decreases, symmetrically.

A vertical line in FIG. 3 represents a single frequency. As already stated, it is desirable that all of the phases of a multiphase resonant converter operate at a common frequency, and this may be represented on the duty-cycle / frequency plane of FIG. 3 by a requirement that the operating point, along the "iso-current" curves of each module are aligned vertically. Moreover, it will be appreciated that by choosing the frequency that intersects the lowermost frequency module at 50%, the duty cycle variation between phases may be minimised, as illustrated by the frequency 360 shown in FIG. 3. It will be appreciated that deviating from 50% duty-cycle increases the DC-component of the voltage, which in turn increases the voltage stress on the components. Furthermore, deviating from 50% increases the distortion of the signal from a proper sinusoidal-like waveform, which can in turn lead to an increase in rms losses in the resonant tank.

According to the present disclosure, an arbitrary number of noncoupled resonant DC-DC converters may be connected in parallel, and controlled to converge on the same frequency at which frequency at least one of the modules is operating at 50% dc, while also minimising this frequency, under the condition that at least one of the modules is operating at 50% dc, based on a "limiting module". The identity of the "limiting module" is not known a priori, for example due to component mismatch. Furthermore, the phase which corresponds to the limiting module may change during operation, as will be described in more detail hereinbelow. Using the approaches disclosed herein, stable control of the multiphase system may be achieved with decentralised, that is to say leaderless or master-less, control. It will be appreciated that conventionally this is particularly challenging to achieve for self-oscillating resonant converters since by default they operate asynchronously.

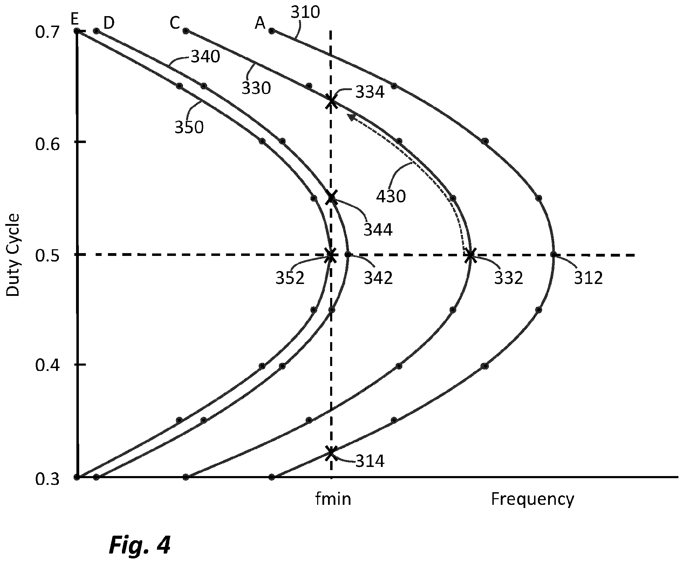

FIG. 4 illustrates a control mechanism according to one part of the present disclosure. In particular, each of the phases commences operation at a 50% duty cycle, that is to say at points 312, 332, 342, and 352 as shown. In order to not to obscure the following discussion, in FIG. 4 and later FIG.s, only four of the phases of FIG. 3 are shown, that with phase B 320 being omitted for clarity.

The controller determines a "minimum 50% duty cycle operating frequency", fmin, from a set consisting of the respective 50% duty cycle operating frequency of each phase of the multiphase resonant converter. In other words, the operating frequency, at 50% duty cycle, of each of the phases A, C, D and E is measured, and may be stored in memory; in the example shown it is found that the frequency fmin of phase E 350 is the minimum one. Since phase 350 has, at its 50% duty cycle, the minimum frequency, this phase will become, at least for the moment, the "limiting module".

Since the operating frequencies of each of the other phases are different from fmin, the controller acts to indirectly change the duty-cycle of each of the phases (other than phase E 350), towards fmin, until the frequencies of each of the phases are aligned at fmin. In general, since the characteristic curves are symmetrical about 50% duty cycle, the operating point of each phase may move towards fmin by either going up (as shown for phase C 330 by the arrow 430), or down the phase's characteristic iso-current curve.

As mentioned, the controller acts to indirectly change the duty-cycle. In particular, instead of directly changing the duty-cycle (over which in a hysteretic control method, the controller generally has no direct control) the controller shifts the hysteretic window offset away (either up or down) from its mean position. The skilled person will appreciate that, other parameters being equal, changing the offset corresponds to changing the duty cycle. In particular, the output current depends only on the norm |(duty-cycle)-50%|, that is the deviation from 50%. The difference between a downwards deviation, i.e. below the 50% point, and an upwards deviation, i.e. above the 50% point, is a DC-voltage offset, negative or positive, respectively, on the resonant capacitor voltage. That is why the dual of this action, that is to say moving the mid-value of the hysteretic control (vth-vtl)/2, affects the duty cycle: it offsets the DC (0Hz) component of the capacitor voltage, which then in turns manifests as a duty-cycle variation for the self-oscillating signal, since the operating points have to be unique for the system. Stated another way, an offset in the hysteretic window causes an offset in capacitor voltage, which corresponds to a variation in duty-cycle needed to inject a DC-component into the capacitor voltage signal (caused by a switching asymmetry), so the self-oscillating system leads to exactly that.

In other words, for each phase, in response to the 50% duty cycle operating frequency of the phase being different from fmin, the controller acts on the hysteretic window offset of the phase to change a current operating frequency of the phase towards fmin, and typically to fmin. Once the operating point of the phases are aligned in frequency at fmin (that is to say they are at points 314, 334, 344, and 352 as shown) the multiphase converter may continue to operate, in steady state, in an optimum condition.

However, the control system also needs to be able to react to a change in operating conditions which may be a perturbation or may be a permanent change. The control system achieves this by implementing two control laws. The first of these control laws is a requirement that the phase updates the system, and in particular identifies this to the controllers of the other phases, its own 50% duty cycle operating is frequency whenever, and only when, this changes (and at the start-up of the system when all the converters start at different frequencies). As a result, the value of fmin changes only when this phase is that with the minimum 50% duty cycle operating frequency. The second of the control laws is that each converter adjusts its frequency towards the frequency fmin by changing the hysteretic window offset (which thus corresponds to changing its duty cycle). In some embodiments, the adjustment may be implemented by means of a PI (proportional-integral) or PID (proportional-integral-derivative) controller where the error is the difference between the operating frequency of the respective module and fmin, or their respective inverses operating switching period defined as 1/f_op and Tmax defined as 1/fmin. The control signal from the controller is the offset of the hysteretic window. The adjustment will be described in more detail with respect to FIG.s 4, 5 and 6.

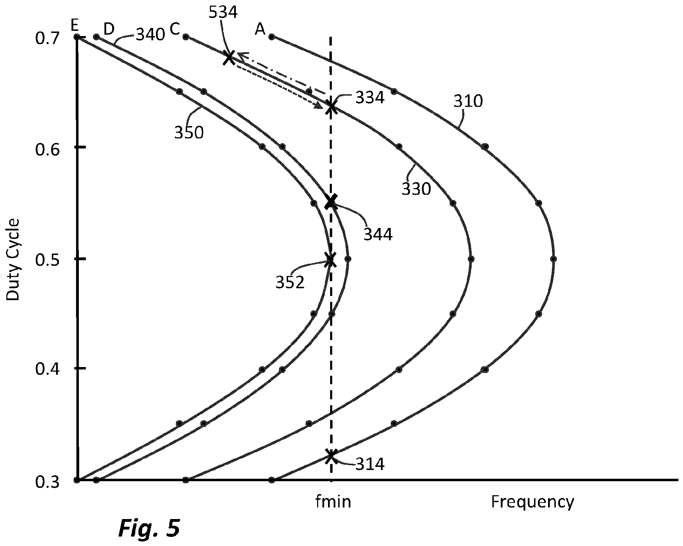

FIG. 5 illustrates the change in operating condition of one of the phases, in which the operation of one of the phases, phase C 330 in this example, is displaced along its characteristic iso-current curve, to the position 534. This could result, for example, from a digital glitch in the controller, or some noise entering the communication channel for a digital/analog controller. By implementing the second control law, the controller of phase C adjusts its hysteretic window offset (in this case towards zero) so the operating points of phase C 330 moves back along the iso-current curve until it settles at the stable operating point at fmin, 334. Although in the example shown in the FIG., the disturbance is a decrease in frequency, implementation of the same second control law in the opposite example of an increase in frequency similarly results to the operating point of phase C moving back along the iso-current curve to the stable operating point at fmin, 334.

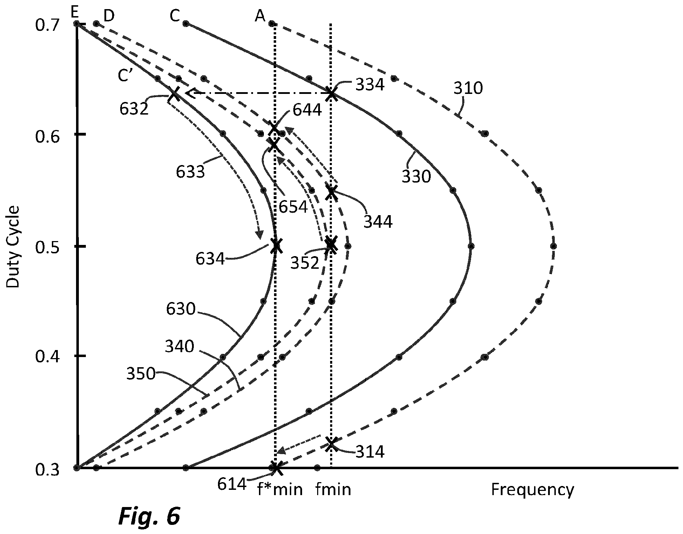

FIG. 6 illustrates a different change in operating condition of one of the phases, in this example, the load may have changed, such that the load impedance is different such that a different requirement for the output current is set. As a result, the phase or phases no longer operate on the same iso-current characteristic curves; since the current is different, they operate on different iso-current characteristic curves. In order not to obscure operation of the entire system, in the example of FIG. 6 it is assumed that the current requirement from just one phase, phase C 330 in the example shown, is modified. As a result, the phase now operates along a new iso-current curve 630, shown in FIG. 6. In the example shown, a reduction in current is illustrated, which may correspond to a shift generally leftward of the characteristic iso-current curve 630, relative to the original operating curve 330.

Consequent to this change or perturbation in operating conditions, the two control laws mentioned above operate as follows: when the change occurs, the controller of phase C is operating with the same hysteretic window offset as prior to the change, so the operating point of the phase does not change in a vertical direction, but shifts horizontally to the left, as shown at 632. The frequency of operation of phase C is now different to fmin, so the control of the phase adjusts the hysteretic window offset to change the operating frequency towards fmin. The operating point of phase C thus moves around its new iso-current characteristic curve, as illustrated at 633. In the example shown the entirety of the new operating curve 630 of phase C, is to the left (that is to say at a lower frequency) than the system's current minimum 50% duty cycle operating frequency fmin. As a result, the operating point of phase C reaches the 50% duty cycle-operating point shown at 634, without ever achieving the operating frequency fmin. According to the first control law, since this phase is now operating at 50% duty cycle, it updates the rest of the system with its new 50% duty cycle operating frequency, shown as f*min.

Since the value of f*min is less than the value of fmin, the system updates fmin, by replacing it with f*min. As a result, none of the other phases A, D and E are now operating at the "correct" target frequency, which is now f*min instead of the original fmin. The second control law now forces each of the other phase to change their operating points. This is illustrated in FIG. 6 by phase A adjusting its operating point to position 614 shown, phase D adjusting its operating point to position 644 as shown, and phase B adjusting its operating point to position 654, again as shown. It will be appreciated that the frequency of each of the operating points 614, 644 and 654 is f*min, being the new minimum 50% duty cycle operating point among the set.

In the example shown in FIG. 6, the new iso-current characteristic curve of phase C is entirely to the left of (that is to say has a lower frequency) than the old minimum 50% duty cycle operating frequency, fmin. In other scenarios, the change in current requirement from phase C may be less extreme such that its new characteristic curve crosses the fmin line in the FIG. before reaching 50% duty cycle. In this scenario, the operating point for phase C settles at fmin, without moving substantially further round the curve (in general there will be a small overshoot due to the settling in the control system): in such a scenario phase C does not operate at 50% duty cycle and thus does not broadcast, or even know, it's own new operating frequency at 50% duty cycle.

The skilled person will appreciate, that this situation, in which the operating conditions of a phase have changed such that it operates on a new iso-current characteristic curve without even knowing the operating frequency at 50% duty cycle, does not result in ambiguity for the system as a whole. In particular, even if the "unknown" frequency at 50% duty cycle of this phase, which we may denote f?min, were to become the minimum 50% duty cycle operating frequency among the phases, and this was unknown to the system, this phase would adjust its operating point towards the frequency (f*min) which was understood by the system to be the minimum 50% duty cycle operating frequency. In doing it so would reach its own 50%-duty cycle operating frequency (f?min) without achieving f*min. According to the first control law it would then broadcast this frequency (f?min) which would become the new minimum 50% duty cycle operating frequency for the system as a whole.

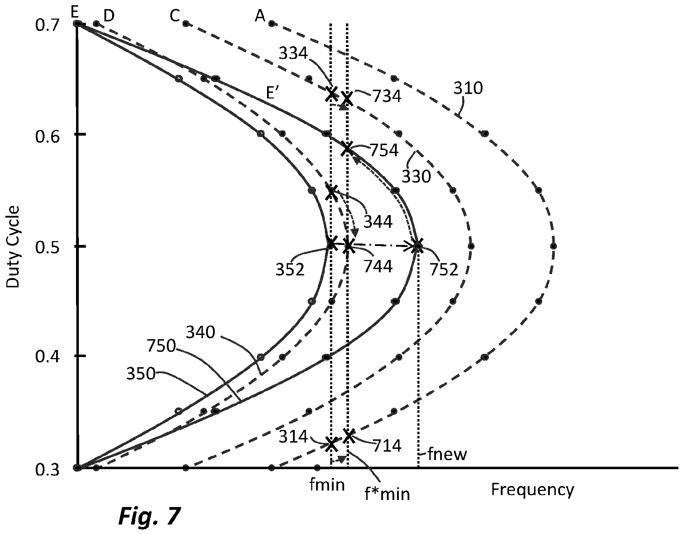

Another change of perturbation is illustrated in FIG. 7. In this example, the operating conditions of phase E are modified, for example by decreasing the current requirements from that phase or module, so as to result in the phase operating on a new iso-current curve, shown in FIG. 7 as 750. Prior to the change of perturbation, phase E was operating at 50% duty cycle at frequency fmin, as shown at position 352. Phase E was thus the limiting module. As a result of the change, the operating point of phase E moves to the right (horizontally since the control for phase E has not adjusted its hysteretic window offset) to new operating position 752. According to the first control law, this phase informs the system of its (new) 50% duty cycle operating frequency, fnew. However, this frequency is no longer the minimum frequency among the set of 50% duty cycle operating frequencies. The system has to update fmin. In this example, the new minimum 50% duty cycle operating frequency is that, f*min, of phase D. Although phase D is not currently operating at this frequency, but has a positive hysteretic window offset at operating point 344, it will be recalled that, on commencement of the system operation, each of the phases was operated at its own 50% duty cycle such that the system was able to identify, and may have stored in memory, each of the 50% duty cycle operating frequencies. Thus the new value of fmin (f*min) is available to the system.

Since there is a new minimum 50% duty cycle operating frequency (f*min) the second control law requires that each phase adjusts its own operating frequency towards this new minimum 50% duty cycle operating frequency. In consequence, phase A moves its operating point from 314 to 714, phase C moves its operating point from 334, to 734, and phase D moves its operating point from 344 to 744. Finally, phase E moves its operating point from 752 to 754.

FIG.s 4 to 7 above, and the description related thereto, illustrate the two control laws which form a basis of methods consistent with the present disclosure. In particular the first control law requires that converter only updated broadcast frequency to the rest the system when its duty cycle is 50%; the second control law requires each converter to just its frequency towards the presently understood reference frequency, by changing the offset of the hysteretic window, which corresponds to changing or adjusting its duty cycle. The skilled person will appreciate that this process of adjustment and stabilisation is a passive one in the sense of not requiring any specific phase-controller to command the other phases to adjust. The processes mentioned above with regard to FIG.s 4 to 7 explain how the system thus passively achieves the new operating point when the characteristic curves change shape.

It will be appreciated that the respective controller for each phase is required to know the current minimum 50%-duty cycle operating frequency. This may be achieved in any of a variety of methods. For example, each phase-controller may include a lookup table of the 50% duty cycle operating frequencies of each of the phases, and routinely or periodically inspect the lookup table to determine the minimum value in the lookup table, to be used as fmin, that is to say the present reference or target frequency. In such embodiments, each phase-controller may broadcast its own 50% duty cycle operating frequency to all of the other phases. Such embodiments may generally require that each phase controller can directly communicate with all of the other phase-controller is. In other embodiments, other network architectures may be used, such as a fully-connected star network, or ring network. In a ring network, each phase-controller is typically connected to only two other phase-controllers, in a ring configuration. In such embodiments, the entire set of 50% duty cycle operating frequencies may be transmitted around the ring from one controller to its direct neighbour and so on.

Alternatively, and again without limitation, each controller may transmit to its neighbour only the minimum 50% duty cycle operating frequency. In such embodiments, whenever a phase-controller, say for phase x, receives from its neighbour a value of the currently-understood minimum 50% duty cycle operating frequency fmin, it may compare this frequency with its own, locally stored, 50% duty cycle operating frequency, which we may denote fxmin. If fxmin < fmin, the controller for phase x replaces fmin by the new, lower, value fxmin, and forward this value to its neighbouring controller as the minimum 50% duty cycle operating frequency which should be the reference or target frequency. Otherwise, it's simply forwards the original value of fmin as the minimum 50% duty cycle operating frequency. In such embodiments, the phase-controllers generally need to communicate around the ring continuously, in order to be able to efficiently and quickly react to a new fmin achieved by any of the phases.

As a variation of the above approach, the phase-controllers may transmits, again in a "round robin" fashion both the current value of fmin and the next lowest value, which we may described as f2min. By transmitting two values around the ring, a controller for a phase which was the reference phase, but has undergone a change in operating condition such that its 50% duty cycle operating frequency (fxmin) has increased may become immediately aware of the new target or reference frequency, in the situation that fxmin > f2min. In other words, by each phase knowing the two lowermost potential reference frequencies, the system is able to react more quickly to a scenario such as that described above with reference to FIG. 7.

The skilled person will appreciate that the discussion above has focused on the independence of the phase-controllers for each individual phase of the multiphase converter. Independently controlling the phases, the system may be made truly modular. This may be advantageous for example by allowing phases, including the phase-controller, to be added, replaced, or removed from the controller as a whole. In other embodiments, two or more of the phase-controllers may be implemented as subunits of a multi phase-controller which controls more than one of the phases. Thus the multiphase converter may include subunits having more than one phase. In yet other embodiments, a single controller may be used to control each of the phases. Individual subunits of the single controller may still operate independently from each other. In such embodiments, a single lookup table may be made available to each of the subunits for controlling individual phases.

In embodiments in which individual controllers are used, independently of each other, to control separate phases, the phase may have individual clocks. The clocks may be driven from local oscillator's, which may include a mismatch. The skilled person will appreciate that, in order for each phase to determine the minimum 50% duty cycle operating frequency, either the clocks should be synchronised to remove the mismatch, or each phase should receive signals from the other controllers from which it can determine which of the phases has the minimum 50% duty cycle operating frequency, and what's that frequency is according to its own clock.

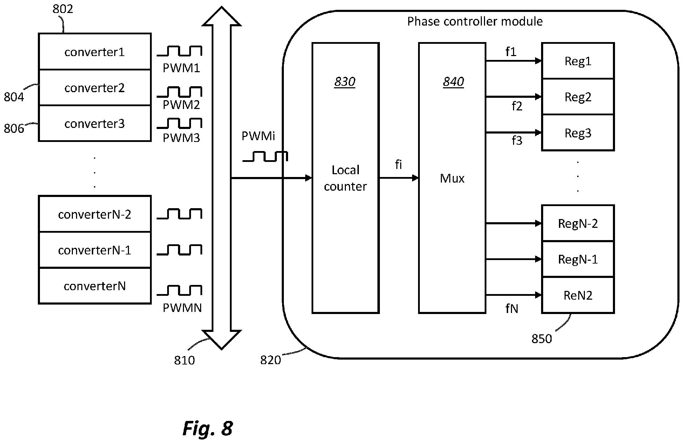

FIG. 8 illustrates a communication means between controllers, and is a part of one of the phase-controllers, which provides a solution to the above issue, whilst avoiding needing to determine and correct the mismatches between oscillators and clocks. Instead of transmitting a value corresponding to its own 50% duty cycle operating frequency, the controller of each converter 802, 804, 806... transmits, a PWM signal, PWM 1, PWM2, PWM3...representative of its own 50% duty cycle operating frequency. In the example shown these are broadcast via a bus 810 however in other embodiments as discussed above, the PWM signals are transmitted around the ring. In a module 820 of the local phase-controller, the local phase-controller uses a counter 830 to measure the frequency of the PWM signal received from another controller. The counsellor uses the phase-controller own local clock to measure the frequency of the PWM signal. And uses a multiplexer 840, to direct the (locally) measured frequency f1, f2, f3 ... To an appropriate register in a register bank 850. Since the frequency is f1, f2, f3 ... of the 50% duty cycle operating frequencies of each of the others phases have been determined using the same (local) counter, they are locally consistent. The values in each of the registers may be different from the corresponding value in the corresponding register bank of another local controller; however, the order of the values will be the same across each local controller.

The illustrations of embodiments described herein are intended to provide a general understanding of the structure of various embodiments, and they are not intended to serve as a complete description of all the elements and features of apparatus and systems that might make use of the structures described herein. Many other embodiments will be apparent to those of skill in the art upon reviewing the above description. Other embodiments may be utilized and derived therefrom, such that structural and logical substitutions and changes may be made without departing from the scope of this disclosure. FIG.s are also merely representational and may not be drawn to scale. Certain proportions thereof may be exaggerated, while others may be minimized. Accordingly, the specification and drawings are to be regarded in an illustrative rather than a restrictive sense.

Although specific embodiments have been illustrated and described herein, it should be appreciated that any arrangement calculated or constructed to achieve the same or a similar purpose may be substituted for the specific embodiments shown. This disclosure is intended to cover any and all adaptations or variations of various embodiments. Combinations of the above embodiments, and other embodiments not specifically described herein, are contemplated by the subject disclosure.

For instance, one or more features or aspects from one or more embodiments can be combined with one or more features or aspects of one or more other embodiments. In one or more embodiments, features that are positively recited can also be negatively recited and excluded from the embodiment with or without replacement by another structural and/or functional feature. The steps or functions described with respect to the embodiments of the subject disclosure can be performed in any order. The steps or functions described with respect to the embodiments of the subject disclosure can be performed alone or in combination with other steps or functions of the subject disclosure, as well as from other embodiments or from other steps that have not been described in the subject disclosure. Further, more than or less than all of the features described with respect to an embodiment can also be utilized.

Less than all of the steps or functions described with respect to the exemplary processes or methods can also be performed in one or more of the exemplary embodiments. Further, the use of numerical terms to describe a device, component, step or function, such as first, second, third, and so forth, is not intended to describe an order or function unless expressly stated so. The use of the terms first, second, third and so forth, is generally to distinguish between devices, components, steps or functions unless expressly stated otherwise. Additionally, one or more devices or components described with respect to the exemplary embodiments can facilitate one or more functions, where the facilitating (e.g., facilitating access or facilitating establishing a connection) can include less than every step needed to perform the function or can include all of the steps needed to perform the function.

The Abstract of the Disclosure is provided with the understanding that it will not be used to interpret or limit the scope or meaning of the claims. In addition, in the foregoing Detailed Description, it can be seen that various features are grouped together in a single embodiment for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus the following claims are hereby incorporated into the Detailed Description, with each claim standing on its own as a separately claimed subject matter.

**Claims**

1. A method of hysteretic control of a phase of a decoupled multiphase resonant converter, using a hysteretic window offset control parameter, the method comprising:

   determining a minimum 50% duty cycle, dc, operating frequency, fmin, from a set consisting of the respective 50% dc operating frequency of each phase of the multiphase resonant converter;
   in response to the 50% dc operating frequency of the phase being different from fmin, adjusting the hysteretic window offset of the phase to change a current operating frequency of the phase towards fmin; and,
   in response to a change of an operating condition of the phase:

      re-adjusting the hysteretic window offset of the phase to change the operating frequency of the phase towards fmn;
      and in the event that a new 50% dc operating frequency of the phase, f*min, is less than fmin;
      replacing fmin by f*min, and communicating f*min as a new minimum 50% duty cycle operating frequency to each other phase.

2. The method of claim 1, further comprising storing the set of the respective 50% duty cycle operating frequency of each phase of the multiphase resonant converter in a memory.

3. The method of claim 2, further comprising if the 50% duty cycle operating frequency of the phase, prior to the change in operating condition, is greater than f*min, replacing fmin by f*min in the memory.

4. The method of any preceding claim, wherein a change in an operating condition of the phase is a change in one of the group consisting of an input voltage, an input current, a load impedance, and a load current.

5. The method of any preceding claim, wherein the hysteretic window offset is an offset from a midpoint between a high input voltage level and a low input voltage level.

6. The method of any preceding claim, wherein adjusting the hysteretic window offset of the phase to change a current operating frequency of the phase towards fmin, comprises adjusting the hysteretic window offset of the phase to change a current operating frequency of the phase until the current operating frequency of the phase is equal to fmin.

7. The method of any preceding claim, further comprising adjusting a hysteretic window width of the phase to control an output current of the phase.

8. The method of any preceding claim, wherein the hysteretic window width is a difference between a low voltage control set-point for starting charging a resonant tank of the phase, and a high voltage control set-point for stopping charging a resonant tank of the phase.

9. A phase-controller for a phase of a decoupled multiphase resonant converter, using a hysteretic window offset control parameter, the phase-controller comprising:

   a hysteretic control module configured to control the phase using a hysteretic window width, and a hysteretic window offset to control a duty-cycle of the phase;
   a memory configured to store a minimum 50% duty cycle, 50% dc, operating frequency, fmin, from a set consisting of the respective 50% dc operating frequency of each phase of the multiphase resonant converter; and
   an communication module configured to send and receive signals indicative of fmin;
   wherein the hysteretic control module is further configured to:

      in response to the 50% dc operating frequency of the phase being different from fmin, adjust the hysteretic window offset of the phase to change a current operating frequency of the phase towards fmin; and,
      in response to a change of an operating condition of the phase:

         re-adjust the hysteretic window offset of the phase to change the operating frequency of the phase towards fmn;
         and in the event that a resulting 50% dc operating frequency of the phase, f*min, is less than fmin, replace fmin by f*min;
         and wherein the communication module is configured to communicate f*min as a new minimum 50% dc operating frequency to each other phase.

10. The phase-controller of claim 9, further comprising wherein the memory is further configured to store the set of the respective 50% dc operating frequency of each phase of the multiphase resonant converter.

11. The phase-controller of claim 10, further configured to, in response to f*min being less than the 50% duty cycle operating frequency of the phase prior to the change in operating condition, replace fmin by f*min in the memory.

12. The phase-controller of any of claim 9 to 11, wherein a change in an operating condition of the phase is a change in one of the group consisting of an input voltage, an input current, a load impedance, and a load current.

13. The phase-controller of any of claims 9 to 12, wherein the hysteretic window offset is an offset from a midpoint between a high input voltage level and a low input voltage level.

14. The phase-controller of any of claims 9 to 13, wherein adjusting the hysteretic window offset of the phase to change a current operating frequency of the phase towards fmin, comprises adjusting the hysteretic window offset of the phase to change a current operating frequency of the phase until the current operating frequency of the phase is equal to fmin.

15. The phase-controller of any of claims 9 to 14, further configured to adjust a hysteretic window width of the phase to control an output current of the phase.

*FIG. 1*

210

1/freq

Ton

220

Toff

230

DC= Ton/ (Ton+Toff)=f.Ton

*Fig. 2A*

+Vin/2 ———————————— +Vin/2

Vhh

240

250

0

hwo

Vhl

-Vin/2 ———————————— -Vin/2

*Fig. 2B*

**Fig. 3**

**Fig. 4**

Fig. 5

**Fig. 6**

*Fig. 7*

*Fig. 8*